# EUROPEAN PATENT APPLICATION

(11) **EP 1 843 567 A2**
(43) Date of publication of application: **10.10.2007**
(21) Application number: 07006920.8
(22) Date of filing: 03.04.2007
(51) Int. Cl.: H04N 1/00, H04N 1/047

(54) **Image reading apparatus with subscanning position correction according to reading light intensity at the scanning position**

(30) Priority: 03.04.2006 JP 2006101685
(71) Applicant: Seiko Epson Corporation, Shinjuku-ku Tokyo 163-0811 (JP)
(72) Inventor: Shinagawa, Yu, Suwa-shi Nagano 392-8502 (JP)
(74) Representative: HOFFMANN EITLE

(57) **Abstract**

An image reading apparatus includes: a light source; an image capturing device, opposed to the light source through a document table adapted to support a document and operable to receive light emitted from the light source; a detector, operable to detect a light-reception state of the image capturing device when an instruction for reading the document is given; and a corrector, operable to correct a relative position in a sub scanning direction between the light source and the image capturing device based on a detection result of the detector.

## Description

### BACKGROUND

### 1. Technical Field

The present invention relates to an image reading apparatus.

### 2. Related Art

There is a related image reading apparatus having a reading mechanism for optically reading an image of a light-transmitting document (hereinafter, referred to as "transmissive document") by detecting the intensity of light which is emitted from a light source disposed opposite to an image capturing device with the document interposed therebetween and is focused on the image capturing device after passing through the transmissive document such as a photograph film (for example, see JP-A-6-178059).

In some image reading apparatuses of such a type, a light source and an image capturing device can reciprocate in a sub scanning direction. The light source and the image capturing device of the image reading apparatus move between a home position that is a start position of a reading operation and a return position that is located opposite to the home position and is a start position of movement to the home position.

There is an image reading apparatus in which a light source and an image capturing device can be separated from each other in the image reading apparatuses in which the light source and the image capturing device can reciprocate in the sub scanning direction. For example, in the image reading apparatus, the light source and a movement mechanism for moving the light source are provided in a lid member or the like, where the light source is moved by a motor independent from a motor for moving the image capturing device. In the image reading apparatus, a sensor for correcting a relative position in the sub scanning direction between the light source and the image capturing device is provided and the light source and the image capturing device are synchronized with each other in accordance with the detection result of the sensor.

In such an image reading apparatus that the light source and the image capturing device are separable from each other, when the light source and the image capturing device are once separated from each other and then reading operation for a document is performed, the relative position in the sub scanning direction between the light source and the image capturing device may be shifted from a position suitable for reading the document. Accordingly, when an instruction for reading a document is given, the relative position in the sub scanning direction between the light source and the image capturing device is corrected before reading the document.

In the image reading apparatus in which the light source and the image capturing device are separable from each other, the relative position in the sub scanning direction between the light source and the image capturing device has three statuses described below:
(1) a status where the light source is located closer to the home position than the image capturing device;
(2) a status where the light source is located closer to the return position than the image capturing device; and
(3) a status where the light source and the image capturing device are substantially opposed to each other and thus a reading operation can be carried out.

Among the above-mentioned three statuses (1) to (3), statuses (1) and (2) require for correction of the relative position in the sub scanning direction between the light source and the image capturing device. However, in the related art, the relative position in the sub scanning direction between the light source and the image capturing device is corrected even in status (3). Therefore, an unnecessary waiting time is taken before reading the document and thus it is inefficient in reading the document.

In order to solve such a problem, a sensor for correcting the relative position in the sub scanning direction between the light source and the image capturing device is provided. However, in order to correct the relative position in the sub scanning direction between the light source and the image capturing device by moving the light source or the image capturing device in accordance with the detection result of the sensor, the sensor and a control system for performing a control operation in accordance with the detection result of the sensor are necessary, thereby increases cost for manufacturing the image reading apparatus.

### SUMMARY

An advantage of some aspects of the invention is to provide an image reading apparatus capable of correcting a relative position in a sub scanning direction between a light source and an image capturing device, if only necessary.

According to an aspect of the invention, there is provided an image reading apparatus comprising:
a light source;
an image capturing device, opposed to the light source through a document table adapted to support a document and operable to receive light emitted from the light source;
a detector, operable to detect a light-reception state of the image capturing device when an instruction for reading the document is given; and
a corrector, operable to correct a relative position in a sub scanning direction between the light source and the image capturing device based on a detection result of the detector.

The detector may detect a light intensity received by the image pickup device.

The corrector may correct the relative position in the sub scanning direction between the light source and the image capturing device, when the light intensity is less than a predetermined value.

The predetermined value may be set based on a light intensity distribution in the sub scanning direction of the light emitted from the light source.

The light source may emit light having an emission width varying in a main scanning direction depending on a position thereof in the sub scanning direction, and the detector may detect a light-receiving width of the image capturing device.

The corrector may correct the relative position in the sub scanning direction between the light source and the image capturing device, when the light-receiving width deviates from a predetermined range.

The image reading apparatus may further comprise a reference light source, operable to emit light which can be received by the image capturing device in accordance with a relative position between the light source and the image capturing device, and the detector may detect a light-receiving pattern of the image capturing device.

The corrector may correct the relative position in the sub scanning direction between the light source and the image capturing device in accordance with the light-receiving pattern.

The present disclosure relates to the subject matter contained in Japanese patent application No. 2006-101685 filed on April 3, 2006, which is expressly incorporated herein by reference in its entirety.

### BRIEF DESCRIPTION OF THE DRAWINGS

The invention will be described with reference to the accompanying drawings, wherein like numbers reference like elements.

Fig. 1 is a perspective view illustrating an appearance of a scanner according to a first embodiment of the invention.

Fig. 2 is a longitudinal-section front view of the scanner.

Fig. 3 is an exploded perspective view illustrating a transmissive light source.

Fig. 4 is a diagram illustrating a relative position between a transmissive light source and an image capturing device (first).

Fig. 5 is a diagram illustrating a relative position between the transmissive light source and the image capturing device (second).

Fig. 6 is a diagram illustrating a relative position between the transmissive light source and the image capturing device (third).

Fig. 7 is a graph illustrating a light intensity distribution of the transmissive light source in a sub scanning direction.

Fig. 8 is a flowchart illustrating a process performed by the scanner (first).

Fig. 9 is a diagram illustrating an emission shape of a transmissive light source according to a second embodiment of the invention.

Fig. 10 is a diagram illustrating a relative position between a transmissive light source and an image capturing device (first).

Fig. 11 is a flowchart illustrating a process performed by the scanner (second).

Fig. 12 is a diagram illustrating an emission shape of a transmissive light source according to a third embodiment of the invention.

Fig. 13 is a diagram illustrating a relative position between the transmissive light source and the image capturing device (second).

Fig. 14 is a flowchart illustrating a process performed by the scanner (third).

Fig. 15 is a diagram illustrating an emission shape of a transmissive light source according to a fourth embodiment of the invention.

Fig. 16 is a diagram illustrating a relative position between the transmissive light source and the image capturing device (third).

Fig. 17 is a flowchart illustrating a process performed by the scanner (fourth).

### DESCRIPTION OF EXEMPLARY EMBODIMENTS

(First Embodiment)

Hereinafter, an image reading apparatus according to a first embodiment of the invention will be described in detail with reference to the accompanying drawings. The first embodiment relates to a scanner in which the image reading apparatus according to the invention is embodied.

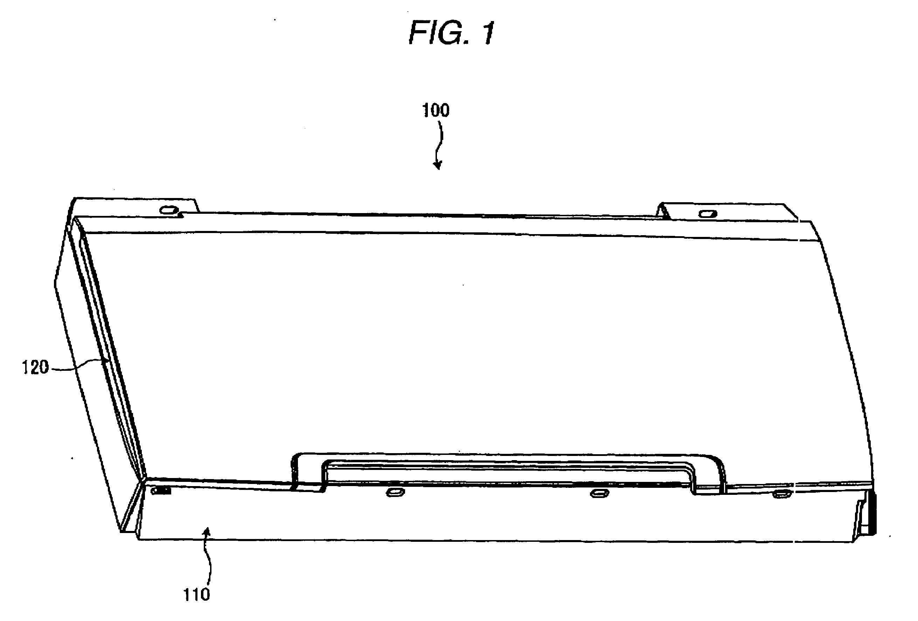

Fig. 1 is a perspective view illustrating an appearance of a scanner according to the first embodiment of the invention. The appearance of the scanner according to the first embodiment will be first described with reference to Fig. 1. As shown in Fig. 1, the scanner 100 includes a main body unit 110 and a transmissive-document light source unit (hereinafter, referred to as "TPU unit") 120.

The TPU unit 120 is disposed opposite to the main body unit 110 and is connected to the main body unit 110 through a hinge portion not shown. The TPU unit 120 can rotate about the hinge portion in a direction getting away from the main body unit 110 from the state shown in Fig. 1.

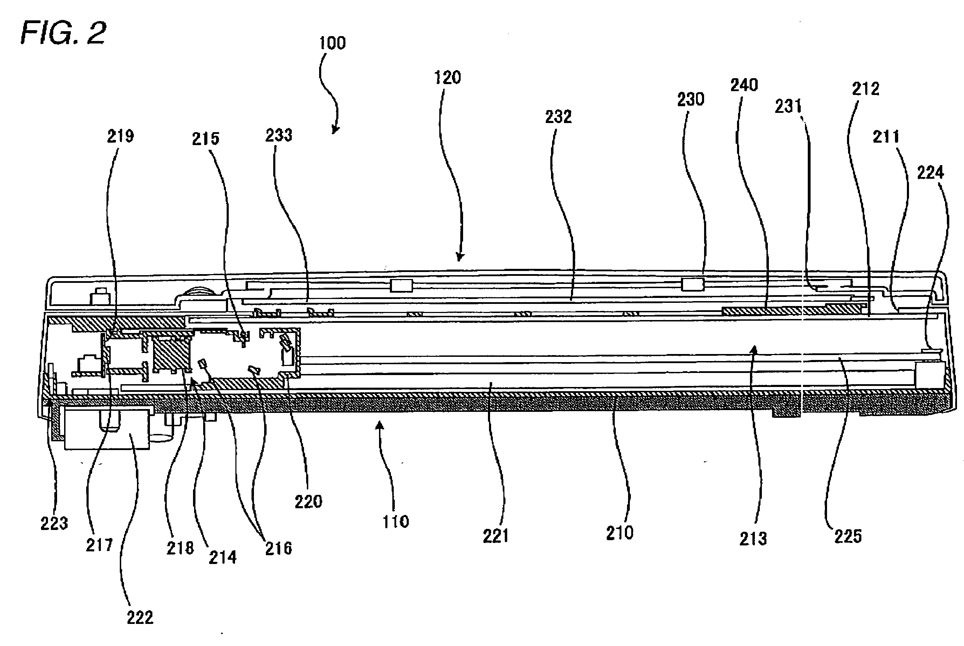

Fig. 2 is a longitudinal-section front view of the scanner 100. A rough configuration of the scanner 100 according to the first embodiment will be next described with reference to Fig. 2. As shown in Fig. 2, the scanner 100 includes a main body housing 210 constituting the outline of the main body unit 110 and a TPU housing 230 constituting the outline of the TPU unit 120.

A rough configuration of the main body unit 110 is first described. The main body housing 210 of the main body unit 110 includes an opening 211 opened to the PUT housing 230. The opening 211 is provided with a document table glass 212 so as to cover the opening 211.

In the first embodiment, a reading window is constituted by the opening 211 and the document table glass 212 and a frame member is constituted by a peripheral portion of the opening 211 of the main body housing 210. A document to be read is placed on the document table glass 212.

An optical member 214 for optically reading an image of the document placed on the document table glass 212 is provided in a space 213 formed by the main body housing 210 and the document table glass 212. The optical member 214 includes a reflective light source 215 for emitting light to the document table glass 212, a plurality of mirrors 216 for guiding the light, which is emitted from the reflective light source 215 and reflected by the document, to a predetermined path, an image capturing device 217 for receiving the light guided by the mirrors 216, and a lens 218 for focusing the light guided by the mirrors 216 on the image capturing device 217.

Photodiodes which convert an optical image focused on a light-receiving face into electrical signals corresponding to the light intensity received by each element and output the electrical signals can be used as the image capturing device 217. In the scanner 100, a linear image sensor in which the photodiodes are linearly arranged in a main scanning direction on a scanning circuit board 219 is used as the image capturing device 217.

A scanner carriage 220 is also provided in the space 213. The scanner carriage 220 is slidable along a carriage guide 221 which is parallel to the document table glass 212 and which extends in the sub scanning direction.

A driving force generated from a motor 222 as a power source is supplied to the scanner carriage 220 through a driving mechanism 223 connected to the motor 222. As described later, the driving mechanism 223 includes a gear train connected to a drive shaft of the motor 222 and a drive belt 225 disposed between gears of the gear train and a follower gear 224. The scanner carriage 220 is connected to the drive belt 225.

The scanner carriage 220 moves between a home position and a return position of the scanner carriage 220 in the sub scanning direction along the document table glass 212 by supplying the driving force generated from the motor 222 to the scanner carriage through the driving mechanism 223. The home position and the return position of the scanner carriage 220 are located outside end portions of the opening 211 along the sub scanning direction.

The optical member 214 is mounted on the scanner carriage 220. The optical member 214 moves in the sub scanning direction along the document table glass 212 with the movement of the scanner carriage 220.

Next, a schematic configuration of the TPU unit 120 will be described. The TPU housing 230 of the TPU unit 120 is provided with an opening 231 opened to the main body housing 210 so as to face the main body housing 210. A protective mat 232 is disposed to cover the opening 231 of the TPU housing 230. The protective mat 232 is detachable from the TPU housing 230.

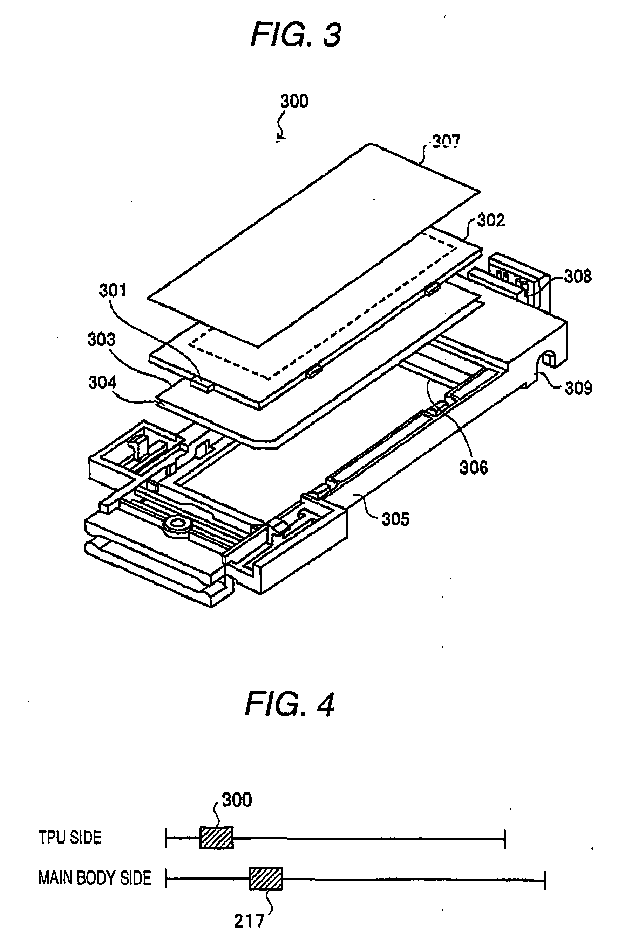

The TPU housing 230 is provided with a transmissive light source unit (see Fig. 3) as a light source. The transmissive light source unit is used to read a light-transmitting document (hereinafter, referred to as "film") such as a photograph film and emits light toward the document table glass 212. The light emitted from the transmissive light source unit travels to the document table glass 212 through an opening not shown but disposed in the TPU unit 120.

The transmissive light source unit is movable in the sub scanning direction along the document table glass 212 and the opening provided in the TPU unit 120 covers a region of the film, which is irradiated by the transmissive light source unit.

The TPU housing 230 is provided with a power supply mechanism not shown for supplying the driving force of the motor 222 to the transmissive light source unit. Although not shown and described in detail, the power supply mechanism disposed in the TPU unit 120 includes a pulley group connected to the driving mechanism 223, a drive belt 233, and a gear pair on which the drive belt 233 is wound.

The transmissive light source unit moves in the sub scanning direction along the document table glass 212 between a home position and a return position of the transmissive light source unit, by means of the driving force generated from the motor 222 and supplied through the power supply mechanism disposed in the TPU unit 120.

The power supply mechanism disposed in the TPU unit 120 has a torque limiter function so as not Lo supply the driving force having a predetermined magnitude to the transmissive light source unit. Here, a description of a specific configuration for implementing the torque limiter function will be omitted.

The home position and the return position of the transmissive light source unit are disposed outside endportions of the opening of the TPU unit 120 in the sub scanning direction. In the scanner 100, a distance between the home position and the return position of the scanner carriage 220 is greater than a distance between the home position and the return position of the transmissive light source unit.

In the first embodiment, when the protective mat 232 is detached from the TPU housing 230, the power supply mechanism disposed in the TPU housing 230 is connected to the motor 222 to supply the driving force of the motor 222 to the transmissive light source. Only when the protective mat 232 is detached from the TPU housing 230, the transmissive light source unit moves in the sub scanning direction along with the scanner carriage 220 by means of the driving force supplied from the motor 222.

At the time of reading the film, a film holder 240 is disposed on the document table glass 212, that is, between the main body unit 110 and the TPU unit 120. The film holder 240 is a member for guiding the film so as to be located at a reading position of a film on the document table glass 212 and fixing the film on the scanning position.

Fig. 3 is an exploded perspective view illustrating the transmissive light source unit. Next, a configuration of the transmissive light source unit will be described with reference to Fig. 3. As shown in Fig. 3, the transmissive light source unit 300 includes LEDs 301 and a light guide plate 302 for guiding the light emitted from the LEDs 301. A pattern shape or a pattern print for guiding the light emitted from the LEDs 301 to the opening 306 is formed on the light guide plate 302, whereby an area larger than an irradiating area of one LED can be irradiated. In Fig. 3, a virtual line marked on the light guide plate 302 indicates an effective emission area of the light guide plate 302.

The light guided by the light guide plate 302 is made to travel from the opening 306 disposed in the support frame 305 to the document table glass 212 through a prism sheet 304 and a diffusion sheet 303. The opening 306 is opened in the same shape as the effective emission area marked on the light guide plate 302. By employing the prism sheet 304 and the diffusion sheet 303, the light guided by the light guide plate 302 can be more uniformly radiated in a larger area.

In the transmissive light source unit 300, a reflecting plate 307 for reflecting the light guided by the light guide plate 302 toward the opening 306 is disposed on the side opposite to the opening 306 with the light guide plate 302 interposed therebetween. By providing the reflecting plate 307, the light guided by the light guide plate 302 can be efficiently radiated toward the document table glass 212.

Reference numeral 308 in Fig. 3 denotes a fixing portion for fixing the transmissive light source unit 300 to the drive belt 233. The fixing portion 308 is disposed on a side of the support frame 305 and is opened upward so as to sandwich the drive belt 233 from the document table glass 212 side.

Reference numeral 309 in Fig. 3 denotes a guide groove into which a guide rail not shown but disposed in the TPU housing 230 is inserted. The guide rail extends in the sub scanning direction, whereby the transmissive light source unit 300 can be stably moved in the sub scanning direction.

Although not shown in the figures, the scanner 100 further includes an operation panel for inputting a variety of user's instructions, a variety of control circuits for controlling the constituent elements of the scanner 100, and a control system for controlling the variety of control circuits in accordance with the instructions input from the operation panel, in addition to the above-mentioned configuration. An instruction for reading an image of a document (reflective document) such as a sheet of paper not transmitting light, an instruction for reading an image of a film, and the like are input to the operation panel.

Although not shown in the figures, the scanner 100 further includes a memory for storing data used for various control operations. For example, judging threshold values to be described later are stored in the memory. The scanner 100 may further include a communication I/F for performing a communication with an external device such as a personal computer. In this case, although not shown in the figures, the scanner 100 receives commands corresponding to instructions input to the personal computer through the communication I/F.

The scanner 100 moves the scanner carriage 220, lights/extinguishes the reflective light source 215 or the transmissive light source unit 300, or creates image data by converting the light focused on the image capturing device 217 into electrical signals, in accordance with instructions input to the operation panel or commands received through the communication I/F.

The scanner 100 may store the created image data in any storage medium or transmit the created image data to an external device such as a personal computer through the communication I/F.

Figs. 4 to 6 are diagrams (first to third diagrams) illustrating a relative position between the transmissive light source unit 300 and the image capturing device 217. Next, the relative position in the sub scanning direction between the transmissive light source unit 300 and the image capturing device 217 are described with reference to Figs. 4 to 6. As described in statuses (1) to (3) above, three statuses shown in Figs. 4 to 6 are considered as the relative position in the sub scanning direction between the transmissive light source unit 300 and the image capturing device 217.

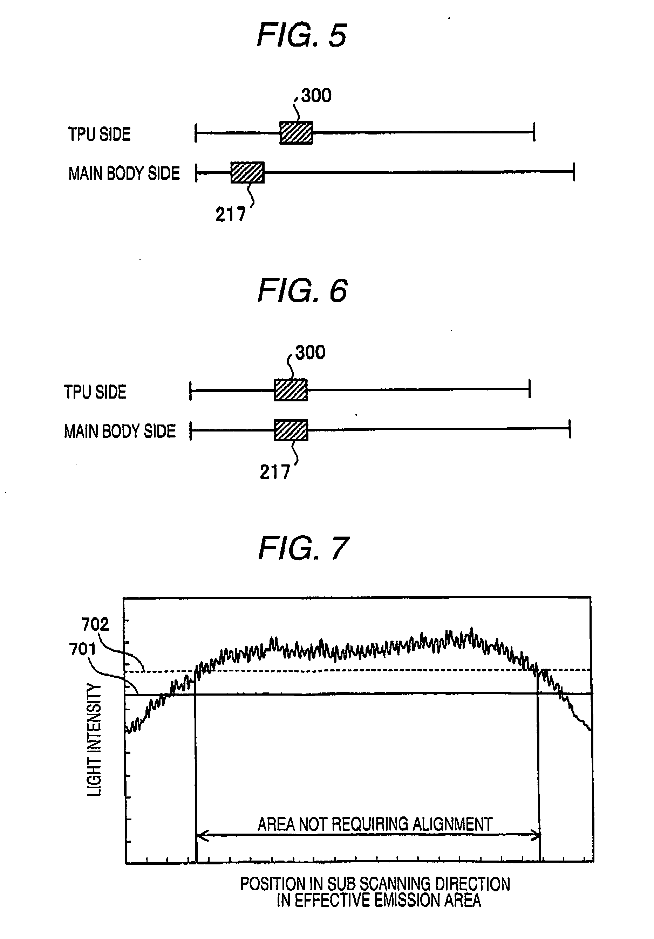

Fig. 4 shows a status where the transmissive light source unit 300 is located closer to the home position than the image capturing device 217. Fig. 5 shows a, status where the transmissive light source unit 300 is located closer to the return position than the image capturing device 217. Fig. 6 shows a status where the transmissive light source unit 300 and the image capturing device 217 are opposed just to each other and thus a reading operation can be performed.

Here, a alignment operation for correcting the relative position in the sub scanning direction between the transmissive light source unit 300 and the image capturing device 217. At the time of performing the alignment operation, first, the scanner carriage 200 is moved to the return position by driving the motor 222 in a state where the motor 222 is connected to the power supply mechanism disposed in the TPU unit 120.

After the scanner carriage 220 is moved to the return position, the scanner carriage 220 is then move to the home position from the return position by driving the motor 222. In this way, the alignment operation is carried out by cousing the scanner carriage 220 to reciprocate along with the transmissive light source unit 300.

By disposing a sensor at a predetermined position, it can be detected that the scanner carriage 220 is moved to the return position or the home position. Descriptions regarding the sensor for detecting the position of the scanner carriage 220 and a technique for detecting the position of the scanner carriage using the sensor will be omitted.

As described above, in the scanner 100, the distance between the home position and the return position of the scanner carriage 220 is larger than the distance between the home position and the return position of the transmissive light source unit 300. For this reason, in status (1) shown in Fig. 4, the transmissive light source unit 300 collides with (arrives at) the home position of the transmissive light source unit 300, while the scanner carriage 220 having moved to the returnposition moves again to the home position from the return position.

In this state, by further driving the motor 222, the scanner carriage 220 moves to the home position in the state where the transmissive light source unit 300 is located at the home position by the torque limiter function of the power supply mechanism disposed in the TPU unit 120. At the time when the scanner carriage 220 moves to the home position, the alignment between the transmissive light source unit 300 and the image capturing device 217 is completed.

In status (2) shown in Fig. 5, the transmissive light source unit 300 collides with (arrives at) the return position of the transmissive light source unit 300, while the scanner carriage 220 moves again to the return position from the home position.

In this state, by further driving the motor 222, the scanner carriage 220 moves to the return position in the state where the transmissive light source unit 300 is located at the return position by the torque limiter function of the power supply mechanism disposed in the TPU unit 120.

Thereafter, the transmissive light source unit 300 moves to the home position from the return position with the movement of the scanner carriage 220 from the return position to the home position. Since the moving distance of the transmissive light source unit 300 is smaller than the moving distance of the scanner carriage 220, the transmissive light source unit 300 collides with (arrives at) the home position of the transmissive light source unit 300 while the scanner carriage 220 moves from the return position to the home position.

Accordingly, similarly to status (1) shown in Fig. 4, the alignment between the transmissive light source unit 300 and the image capturing device 217 is completed at the time when the scanner carriage 220 moves to the home position.

Fig. 7 is a graph illustrating a light intensity distribution in the sub scanning direction of the transmissive light source unit 300. Next, the judging threshold values will be described in detail with reference to Fig. 7. In Fig. 7, the vertical axis indicates the light intensity received by the image capturing device 217 and the horizontal axis indicates a position of the transmissive light source unit 300 in the sub scanning direction in the effective emission area. Both ends of the horizontal axis correspond to limits of the effective emission area in the sub scanning direction.

In Fig. 7, a solid line 701 crossing the graph denotes a lower limit of the light intensity enabling the reading of a document. In Fig. 7, a dotted line 702 crossing the graph denotes a lower limit of the light intensity in consideration of variation of the relative position during movement of the transmissive light source unit 300 and the image capturing device 217. In the first embodiment, the light intensity indicated by the dotted line 702 is set as the judging threshold value.

When the transmissive light source unit 300 and the image capturing device 217 are moved, variation in the relative position in the sub scanning direction between the transmissive light source unit 300 and the image capturing device 217 occurs due to wear or backlash of a mechanism associated with the driving of the transmissive light source unit 300 or the image capturing device 217, eccentricity of gears, or the like. The dotted line 702 is set to a value decreased in advance by the loss of light intensity so as to obtain light intensity enabling the reading of a document even when such variation occurs.

As can be seen from Fig. 7, the light intensity sufficient for carrying out the document reading operation can be obtained within the range separated by a predetermined distance from the limits in the sub scanning direction of the effective emission area of the transmissive light source unit 300.

The lower limit of the light intensity enabling the reading of a document, the lower limit of the light intensity in consideration of the variation of the relative position, and the light intensity distribution shown in Fig. 7 can be obtained by previously measuring and verifying them before manufacturing the scanner 100 at the time of designing the scanner 100 or the like.

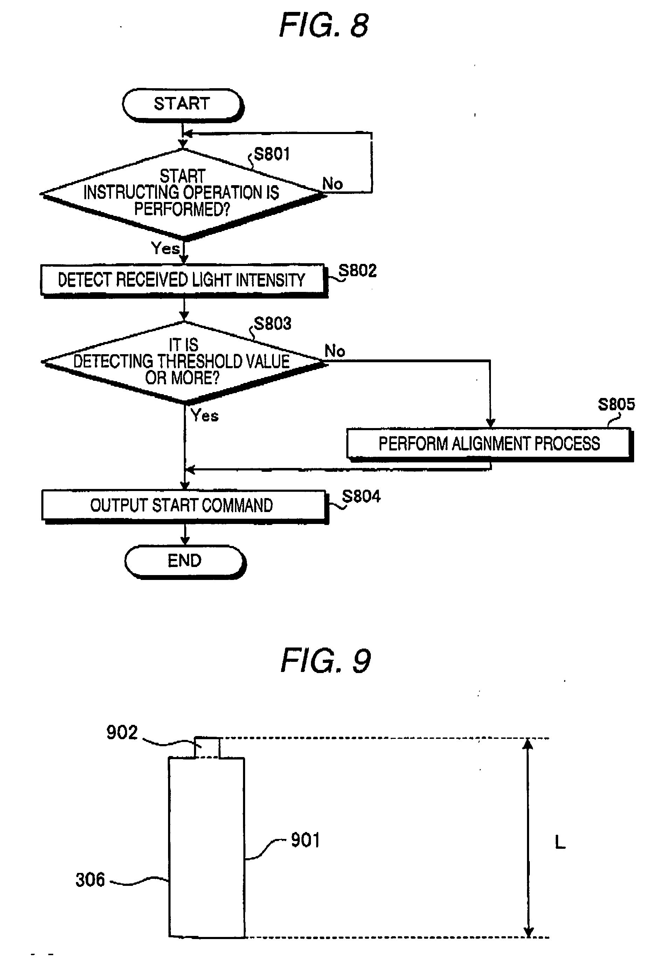

Fig. 8 is a flowchart (first) illustrating a procedure of processes performed by the scanner 100. The procedure of processes shown in Fig. 8 is performed prior to the document reading operation. In the flowchart shown in Fig. 8, first, the procedure is in a standby state until an instruction for starting the document reading operation (described as "START INSTRUCTING OPERATION" in Fig. 8) is given (NO in step S801). When the instruction is given (YES in step S801), the intensity of the light received by the image capturing device 217 is detected (step 5802). The function as detection means is implemented by the constituent elements associated with the detection of the light intensity in step S802 and a variety of control operations using the constituent elements.

Next, it is judgedwhetherthe light intensitydetected in step S802 is equal to or greater than the judging threshold value (step S803). When it is judged that the light intensity is equal to greater than the judging threshold value (YES in step S803), a start command for starting the document reading operation is output to the control system for controlling the constituent elements for performing the document reading operation (step S804) and then the procedure of processes are ended.

On the other hand, when it is judged that the light intensity detected in step S802 is smaller than the judging threshold value (NO in step S803), the alignment process for performing the above-described alignment operation is performed (step S805) to correct the relative position in the sub scanning direction between the light transmissive light source unit 300 and the image capturing device 217 and then the process of step S804 is performed. The function as correction means is implemented by the constituent elements associated with the alignment process in step S805 and a variety of control operations using the constituent elements.

As described above, according to the scanner of the first embodiment, if only necessary, it is possible to perform the alignment process on the basis of the relative position in the sub scanning direction between the transmissive light source unit 300 and the image capturing device 217 when the instruction for reading a film is given.

As a result, since the scanner 100 can start the film reading operation without performing the alignment process depending on the relative position in the sub scanning direction between the transmissive light source unit 300 and the image capturing device 217 when the instruction for reading a film is given, it is possible to enhance efficiency of reading a film. Therefore, a user can obtain image data in which an image of the document is reproduced with high precision for the minimum necessary time.

According to the scanner 100, without using a sensor for correcting the relative position in the sub scanning direction between the transmissive light source unit 300 and the image capturing device 217, it is possible to correct the relative position in the sub scanning direction between the transmissive light source unit 300 and the image capturing device 217, if only necessary.

Therefore, according to the scanner 100, itispossible to correct the relative position in the sub scanning direction between the transmissive light source unit 300 and the image capturing device 217 to a position suitable for reading the film, without increase in cost for manufacturing the scanner 100. When the light intensity received by the image capturing device 217 is sufficient for reading the film, it is possible to enhance the efficiency of reading a film by starting the film reading operation without performing the alignment process.

Accordingly, a user can obtain image data in which an image of the film is reproduced with high precision by the use of the scanner 100 without increase in manufacturing cost for the minimum necessary time.

According to the scanner 100, a variation in light intensity from the transmissive light source unit 300 with the lapse of time may be monitored on the basis of the light intensity received by the image capturing device 217 and detected in the procedure shown in Fig. 8 and the monitoring result may be used to detect a defect occurring in the light source, such as deterioration in emission performance. In this way, by using the detection result for another process, it is possible to enhance a user's reliability of the scanner 100.

In the first embodiment, by judging whether the alignment process should be performed by the use of the judging threshold value set on the basis of the light intensity distribution in the sub scanning direction of the light emitted from the transmissive light source unit 300, it is possible to reliably correct the relative position in the sub scanning direction between the transmissive light source unit 300 and the image capturing device 217 so as to be a position from which it is previously determined that the light intensity enabling the proper reading of a film is obtained.

Thus, according to the scanner 100, it is possible to enhance a user' s reliability of the scanner 100. Therefore, the user can use the scanner 100 without any uneasiness.

(Second Embodiment)

Next, an image reading apparatus according to a second embodiment of the invention will be described in detail with reference to the accompanying drawings. Similarly to the first embodiment, the second embodiment relates to a scanner in which the image reading apparatus according to the invention is embodied. In the second embodiment, differences from the first embodiment are mainly described. In the scanner according to the second embodiment, the same elements as the first embodiment are denoted by the same reference numerals and description thereof is omitted.

Fig. 9 is a diagram illustrating an emission shape of the transmissive light source unit according to the second embodiment. An opening 306 having the shape shown in Fig. 9 is formed in a support frame 305 of the transmissive light source unit 300 according to the second embodiment. In the opening 306, the larger rectangular area 901 out of two areas 901 and 902 divided by a dotted line in Fig. 9 corresponds to the effective emission area. The image capturing device 217 has a light-receiving width corresponding to the width denoted by reference numeral L in Fig. 9.

The area 902 is set in consideration of the non-uniformity in light intensity received by the image capturing device 217 due to the relative position in the sub scanning direction between the transmissive light source unit 300 and the image capturing device 217. Here, as described above, when the transmissive light source unit 300 and the image capturing device 217 are moved, the non-uniformity in light intensity results from the variation of the relative position in the sub scanning direction between the transmissive light source unit 300 and the image capturing device 217 due to wear or backlash of a mechanism associated with the driving of the transmissive light source unit 300 or the image capturing device 217, eccentricity of gears, or the like.

The position of the area 902 in the sub scanning direction is located within the range in which the light intensity enabling the reading of a document can be secured even when the non-uniformity of the light intensity. In the second embodiment, the total length of the area 901 and the area 902 in the main scanning direction, which is larger than the length in the main scanning direction of the area 901, is set as the range of the judging threshold value.

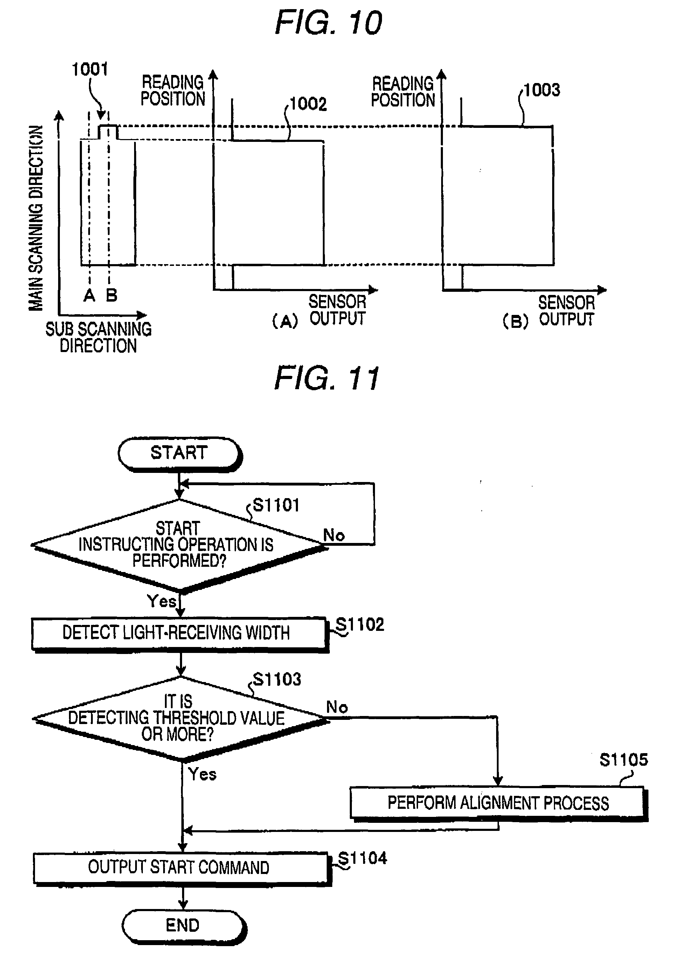

Fig. 10 is a diagram (first part) illustrating the relative position between the transmissive light source unit 300 and the image capturing device 217. The relation between the emission position of the transmissive light source unit 300 and the light-receiving width of the image capturing device 217 is shown in Fig. 10. In Fig. 10, the shape denoted by reference numeral 1001 indicates the emission shape of the transmissive light source unit 300 according to the second embodiment. As shown in Fig. 10, the light-receiving width of the image capturing device 217 varies depending on from what position of the transmissive light source unit 300 the image capturing device 217 receiver the light.

For example, when the image capturing device 217 receives the light emitted from the position indicated by a one-dot-chained line A of Fig. 10 of the transmissive light source unit 300, the light intensity has a pattern indicated by graph 1002 of (A). For example, when the image capturing device 217 receives the light emitted from the position indicated by a one-dot-chained line B of Fig. 10 of the transmissive light source unit 300, the light intensityhas a pattern indicated by graph 1003 of (B).

Fig. 11 is a flowchart (second) illustrating a procedure of processes performed by the scanner 100. In the flowchart shown in Fig. 8, first, the procedure is in a standby state until an instruction for starting the document reading operation (described as "START INSTRUCTING OPERATION" in Fig. 11) is given (NO in step S1101). When the instruction is given (YES in step S1101), the light-receiving width of the light received by the image capturing device 217 is detected (step S1102). The function as detection means is implemented by the constituent elements associated with the detection of the light-receiving width in step S1102 and a variety of control operations using the constituent elements.

Next, it is judged whether the light-receiving width detected in step S1102 is equal to or greater than the judging threshold value (step S1103). When it is judged that the light-receiving width is equal to greater than the judging threshold value (YES in step S1103), a command for starting the documentreading operation is output to the control system for controlling the constituent elements for performing the document reading operation (step S1104) and then the procedure of processes are ended.

On the other hand, when it is judged that the light-receiving width detected in step S1102 is smaller than the judging threshold value (NO in step S1103), the alignment process of performing the alignment operation is performed (step S1105) to correct the relative position in the sub scanning direction between the light transmissive light source unit 300 and the image capturing device 217 and then the process of step S1104 is performed. The function as correction means is implemented by the constituent elements associated with the alignment process in step S1105 and a variety of control operations using the constituent elements.

As described above, according to the scanner of the second embodiment, if only necessary, it is possible to perform the alignment process on the basis of the relative position in the sub scanning direction between the transmissive light source unit 300 and the image capturing device 217 when the instruction for reading a film is given, without using a sensor for correcting the relative position in the sub scanning direction between the transmissive light source unit 300 and the image capturing device 217.

As a result, the scanner 100 can correct the relative position in the sub scanning direction between the transmissive light source unit 300 and the image capturing device 217 to a position suitable for reading a document, without increase in manufacturing cost. In addition, since the scanner 100 can start the film reading operation without performing the alignment process depending on the relative position in the sub scanning direction between the transmissive light source unit 300 and the image capturing device 217 when the instruction for reading a film is given, it is possible to enhance the efficiency of scanning a film.

Accordingly, a user can obtain image data in which an image of the film is reproduced with high precision by the use of the scanner 100 without increase in manufacturing cost for the minimum necessary time.

(Third Embodiment)

Next, an image reading apparatus according to a third embodiment of the invention will be described in detail with reference to the accompanying drawings. Similarly to the first and second embodiments, the third-embodiment relates to a scanner in which the image reading apparatus according to the invention is embodied. In the third embodiment, differences from the first or second embodiment are mainly described. In the scanner according to the third embodiment, the same elements as the first and second embodiments are denoted by the same reference numerals and description thereof is omitted.

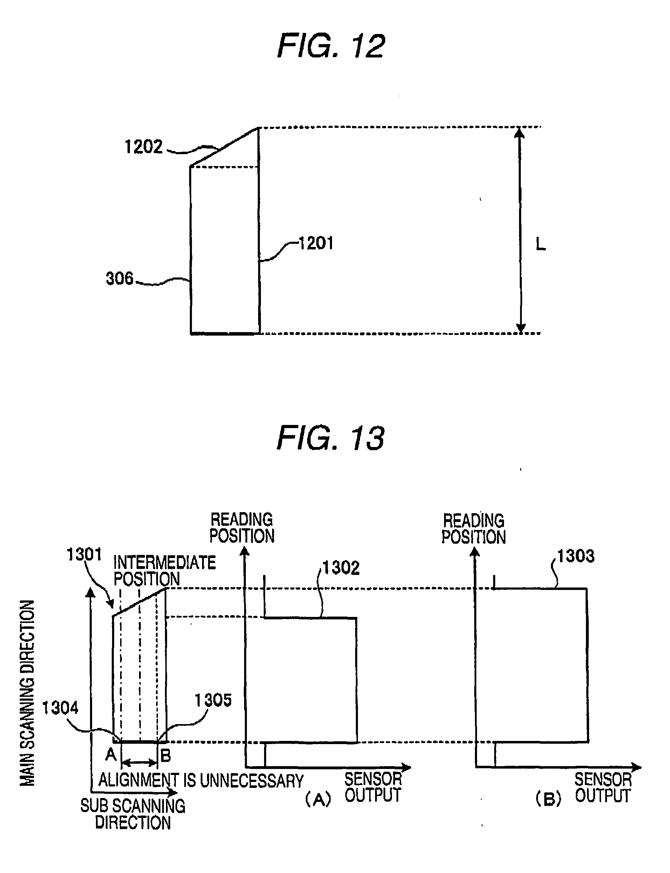

Fig. 12 is a diagram illustrating an emission shape of the transmissive light source unit 300 according to the third embodiment. An opening 306 having the shape shown in Fig. 12 is formed in a support frame 305 of the transmissive light source unit 300 according to the third embodiment. The rectangular area 1201 out of two areas 1201 and 1202 divided by a dotted line in Fig. 12 corresponds to the effective emission area. The image capturing device 217 has a light-receiving width corresponding to the width denoted by reference numeral L in Fig. 12.

The shape of the opening 306 in the transmissive light source unit 300 according to the third embodiment is not simply rectangular but is a shape in which the home position side and the return position side are asymmetric in the sub scanning direction by inclining one side extending in the sub scanning direction about the sub scanning direction.
Accordingly, the light-receiving width of the image capturing device 217 varies depending on the relative position in the sub scanning direction between the transmissive light source unit 300 and the image capturing device 217 and a constant relation is established between the light-receiving width and the relative position in the sub scanning direction between the transmissive light source unit 300 and the image capturing device 217.

Fig. 13 is a diagram (second part) illustrating the relative position between the transmissive light source unit 300 and the image capturing device 217. The relation between the emission position of the transmissive light source unit 300 and the light-receiving width of the image capturing device 217 is shown in Fig. 13. In Fig. 13, the shape denoted by reference numeral 1301 indicates the emission shape of the transmissive light source unit 300 according to the third embodiment. As shown in Fig. 13, the light-receiving width of the image capturing device 217 varies depending on from what position of the transmissive light source unit 300 the image capturing device 217 receives the light.

For example, when the image capturing device 217 receives the light emitted from the position indicated by a one-dot-chained line A of Fig. 13 of the transmissive light source unit 300, the light intensity has a pattern indicated by graph 1302 of (A). For example, when the image capturing device 217 receives the light emitted from the position indicated by a one-dot-chained line B of Fig. 13 of the transmissive light source unit 300, the light intensity has a pattern indicated by graph 1303 of (B).

In Fig. 13, reference numerals 1304 and 1305 denote boundary positions representing a range in which the light intensity enabling the scanning of a document can be secured even when the non-uniformity in light intensity occurs. The boundary positions 1304 and 1305 are set in consideration of the non-uniformity in light intensity received by the image capturing device 217 depending on the relative position in the sub scanning direction between the transmissive light source unit 300 and the image capturing device 217.

The boundary positions 1304 and 1305 in the sub scanning direction are located within the range in which the light intensity enabling the reading of a document can be secured even when the non-uniformity of the light intensity. In the third embodiment, in the opening 306, the length of a portion corresponding to the boundary position 1305 in the main scanning direction, which is larger than the length of a portion corresponding to the boundary position 1304 in the main scanning direction, is set as the range of the judging threshold value.

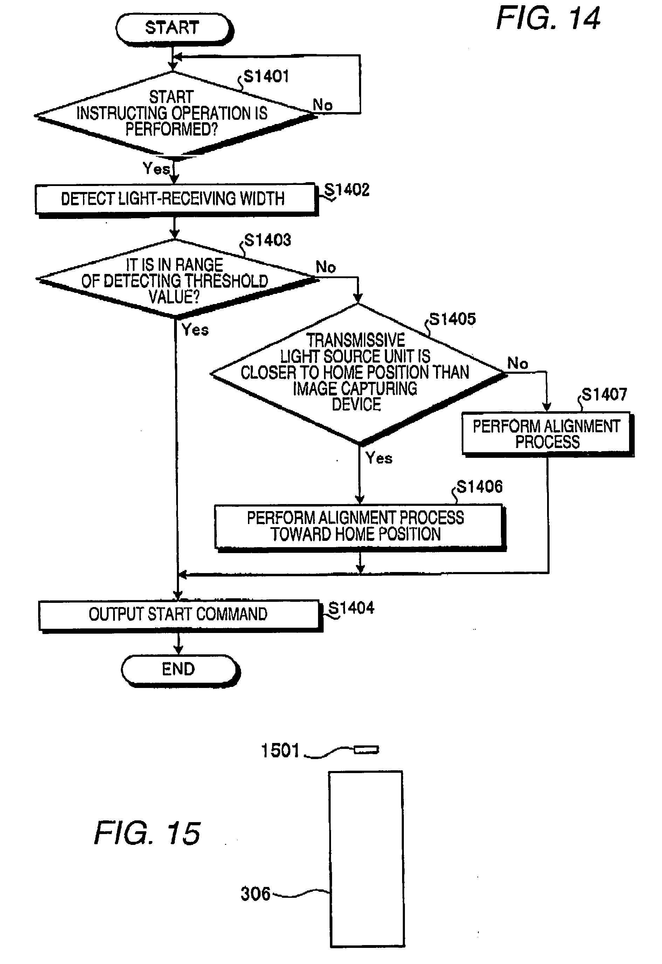

Fig. 14 is a flowchart (third part) illustrating a procedure of processes performed by the scanner 100. In the flowchart shown in Fig. 14, first, the procedure is in a standby state until an instruction for starting the document reading operation is given (NO in step S1401). When the instruction is given (YES in step S1401), the light-receiving width of the light received by the image capturing device 217 is detected (step S1402). The function as detection means is implemented by the constituent elements associated with the detection of the light-receiving width in step S1402 and a variety of control operations using the constituent elements.

Next, it is judged whether the light-receiving width detected in step S1402 is within the range of the judging threshold value (step S1403). When it is judged that the light-receiving width is within the range of the judging threshold value (YES in step S1403), a start command for starting the document reading operation is output to the control system for controlling the constituent elements for performing the document reading operation (step S1404) and then the procedure of processes are ended.

On the other hand, when it is judged that the light-receiving width detected in step S1402 deviates from the range of the judging threshold value (NO in step $1403), it is judged on the basis of the detected light-receiving width whether the transmissive light source unit 300 is closer to the home position than the image capturing device 217 (step S1405).

When it is judged in step S1405 that the transmissive light source unit 300 is closer to the home position than the image capturing device 217 (YES in step S1405), the alignment process of performing the alignment operation of moving the transmissive light source unit 300 and the image capturing device 217 to the home position is performed (step S1406) to correct the relative position in the sub scanning direction between the light transmissive light source unit 300 and the image capturing device 217 and then the process of step S1404 is performed. The function as correction means is implemented by the constituent elements associated with the alignment process in step S1406 and a variety of control operations using the constituent elements.

On the other hand, when it is judged in step S1405 that the transmissive light source unit 300 is not closer to the home position than the image capturing device 217 (NO in step S1405), the alignment process of performing the alignment operation described in the first and second embodiments is performed (step S1407) to correct the relative position in the sub scanning direction between the light transmissive light source unit 300 and the image capturing device 217 and then the process of step S1404 is performed. The function as correction means is implemented by the constituent elements associated with the alignment process in step S1407 and a variety of control operations using the constituent elements.

In this way, in the scanner 100 according to the third embodiment, in addition to the advantages of the second advantages, it is possible to judge which of the transmissive light source unit 300 and the image capturing device 217 is closer to the home position to what extent when the transmissive light source unit 300 and the image capturing device 217.

Accordingly, in the state where the transmissive light source unit 300 is closer to the home position than the image capturing device 217, the scanner 100 according to the third embodiment can correct the relative position in the sub scanning direction between the transmissive light source unit 300 and the image capturing device 217 to a position suitable for reading a document, by performing the alignment operation of movement to the home position without moving the transmissive light source unit 300 and the image capturing device 217 toward the return position.

Accordingly, since the scanner 100 can shorten the time required for performing the alignment process, it is possible to enhance the efficiency of reading a film even when performing the alignment process.

(Fourth Embodiment)

Next, an image reading apparatus according to a fourth embodiment of the invention will be described in detail with reference to the accompanying drawings. Similarly to the first to third embodiments, the fourth embodiment relates to a scanner in which the image reading apparatus according to the invention is embodied. In the fourth embodiment, differences from the first, second, or third embodiment are mainly described. In the scanner according to the fourth embodiment, the same elements as the first to third embodiments are denoted by the same reference numerals and description thereof is omitted.

Fig. 15 is a diagram illustrating an emission shape of the transmissive light source unit 300 according to the fourth embodiment. The support frame 305 of the transmissive light source unit 300 according to the fourth embodiment is provided with openings 306 and 1501 having the shapes shown in Fig. 15. The opening 1501 is located at a position not affecting the reading of a,film and also within a range in which the image capturing device 217 can receive light. In the fourth embodiment, the opening 1501 of the transmissive light source unit 300 performs a part of a function as a reference light source.

The opening 1501 is set in consideration of the non-uniformity in light intensity received by the image capturing device 217 depending on the relative position in the sub scanning direction between the transmissive light source unit 300 and the image capturing device 217. The non-uniformity in light intensity occurs for the above-mentioned reasons. The position of the opening 1501 in the sub scanning direction is located in the range in which the light intensity enabling the reading of a document can be secured even when the non-uniformity in light intensity occurs. In the fourth embodiment, the light-receiving pattern when the light is received from both the openings 306 and 1501 is set as the judging pattern.

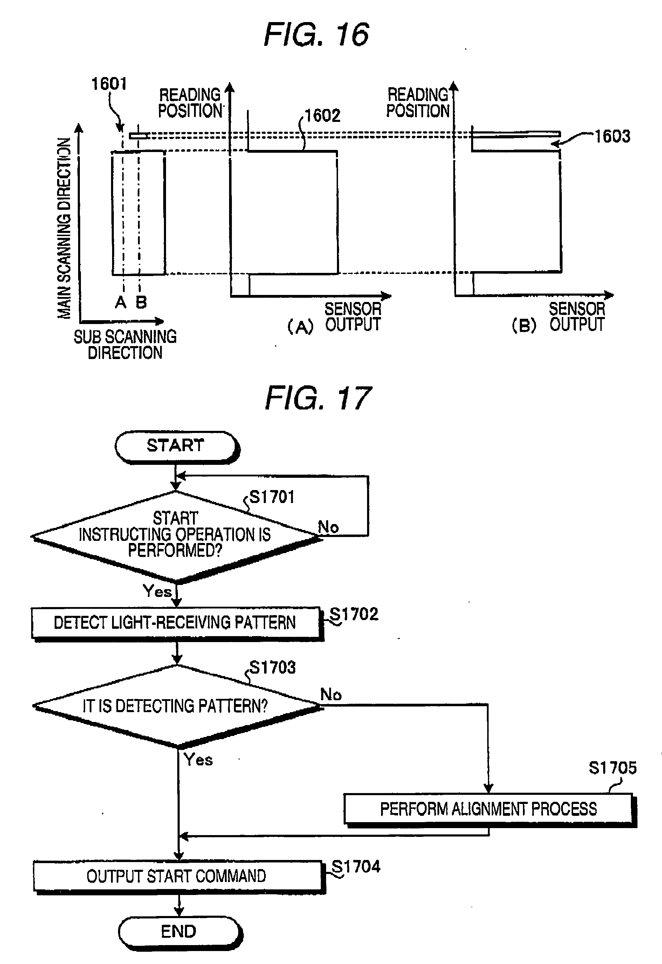

Fig. 16 is a diagram (third part) illustrating the relative position between the transmissive light source unit 300 and the image capturing device 217. The relation between the emission position of the transmissive light source unit 300 and the light-receiving width of the image capturing device 217 is shown in Fig. 16. In Fig. 16, the shape denoted by reference numeral 1601 indicates the emission shape of the transmissive light source unit 300 according to the fourth embodiment. As shown in Fig. 16, the light-receiving pattern of the image capturing device 217 varies depending on from what position of the transmissive light source unit 300 the image capturing device 217 receives the light.

For example, when the image capturing device 217 receives the light emitted from the position indicated by a one-dot-chained line A of Fig. 16 of the transmissive light source unit 300, the light intensity has a pattern indicated by graph 1602 of (A). For example, when the image capturing device 217 receives the light emitted from the position indicated by a one-dot-chained line B of Fig. 16 of the transmissive light source unit 300, the light intensityhas a pattern indicated by graph 1603 of (B).

Fig. 17 is a flowchart (fourth part) illustrating a procedure of processes performed by the scanner 100. In the flowchart shown in Fig. 17, first, the procedure is in a standby state until an instruction for starting the document reading operation is given (NO in step S1701). When the instruction is given (YES in step S1701), the light-receiving pattern of the light received by the image capturing device 217 is detected (step S1702). The function as detection means is implemented by the constituent elements associated with the detection of the light-receiving pattern in step S1702 and a variety of control operations using the constituent elements.

Next, it is judgedwhether the light-receivingpattern detected in step S1702 is the judging pattern (step S1703). In step S1703, it is judged whether the light-receiving pattern is a pattern of only the opening 306 or a pattern of both the opening 306 and the opening 1501.

When it is judged in step S1703 that the light-receiving pattern is the judging pattern (YES in step S1703), a start command for starting the document reading operation is output to the control system for controlling the constituent elements for performing the document reading operation (step S1704) and then the procedure of processes are ended.

On the other hand, when it is judged in step S1703 that the light-receiving pattern detected in step S1702 is not the judging pattern (NO in step S1703), the alignment process of performing the alignment operation is performed (step S1705) to correct the relative position in the sub scanning direction between the light transmissive light source unit 300 and the image capturing device 217 and then the process of step S1704 is performed. The function as correction means is implemented by the constituent elements associated with the alignment process in step S1705 and a variety of control operations using the constituent elements.

As described above, according to the scanner 100, if only necessary, it is possible to correct the relative position in the sub scanning direction between the transmissive light source unit 300 and the image capturing device 217, without using a sensor for correcting the relative position in the sub scanning direction between the transmissive light source unit 300 and the image capturing device 217.

As a result, the scanner 100 can correct the relative position in the sub scanning direction between the transmissive light source unit 300 and the image capturing device 217 to a position suitable for reading a document, without increase inmanufacturing cost. In addition, by starting the film reading operation without performing the alignment process depending on the relative position in the sub scanning direction between the transmissive light source unit 300 and the image capturing device 217, it is possible to enhance the efficiency of reading a film.

Accordingly, a user can obtain image data in which an image of the film is reproduced with high precision by the use of the scanner 100 without increase in manufacturing cost for the minimum necessary time.

Although it has been described in the first to fourth embodiments that the transmissive light source unit 300 and the image capturing device 217 are driven with the driving force of the single motor 222, the invention is not limited to the embodiments. The transmissive light source unit 300 and the image capturing device 217 may be independently moved by providing a drive system for moving the transmissive light source unit 300 and a drive system for moving the image capturing device 217.

Although it has been described in the first to fourth embodiments that the relative position in the sub scanning direction between the transmissive light source unit 300 and the image capturing device 217 are corrected without using a sensor for detecting the relative position in the sub scanning direction between the transmissive light source unit 300 and the image capturing device 217, the invention is not limited to the embodiments. By providing a sensor for detecting the relative position in the sub scanning direction between the transmissive light source unit 300 and the image capturing device 217, the relative position in the sub scanning direction between the transmissive light source unit 300 and the image capturing device 217 may be corrected using the output value of the sensor.

In any case, when the relative position in the sub scanning direction between the transmissive light source unit 300 and the image capturing device 217 are suitable for reading a document, it is possible to enhance the efficiency of reading a document by starting the document reading operation without correcting the relative position in the sub scanning direction between the transmissive light source unit 300 and the image capturing device 217.

Although it has been described in the first to fourth embodiments that the image reading apparatus according to the invention is applied to the scanner 100, the invention is not limited to the embodiments. For example, the invention may be applied to a complex machine having the scanner 100 described in the first to fourth embodiments and an image forming apparatus for forming on a printing medium an image corresponding to the light intensity of the light received by the image capturing device 217 of the scanner 100.

## Claims

1. An image reading apparatus comprising:
a light source;
an image capturing device, opposed to the light source through a document table adapted to support a document and operable to receive light emitted from the light source;
a detector, operable to detect a light-reception state of the image capturing device when an instruction for reading the document is given; and
a corrector, operable to correct a relative position in a sub-scanning-direction between the light source and the image capturing device based on a detection result of the detector.

2. The image reading apparatus according to claim 1, wherein
the detector detects a light intensity received by the image pickup device.

3. The image reading apparatus according to claim 1 or 2, wherein
the corrector corrects the relative position in the sub scanning direction between the light source and the image capturing device, when the light intensity is less than a predetermined value.

4. The image reading apparatus according to claim 3, wherein
the predetermined value is set based on a light intensity distribution in the sub scanning direction of the light emitted from the light source.

5. The image reading apparatus according to any one of the preceding claims, wherein
the light source emits light having an emission width varying in a main scanning direction depending on a position thereof in the sub scanning direction, and
the detector detects a light-receiving width of the image capturing device.

6. The image reading apparatus according to claim 5, wherein
the corrector corrects the relative position in the sub scanning direction between the light source and the image capturing device, when the light-receiving width deviates from a predetermined range.

7. The image reading apparatus according to any one of the preceding claims, further comprising:
a reference light source, operable to emit light which can be received by the image capturing device in accordance with a relative position between the light source and the image capturing device, wherein
the detector detects a light-receiving pattern of the image capturing device.

8. The image reading apparatus according to claim 7, wherein
the corrector corrects the relative position in the sub scanning direction between the light source and the image capturing device in accordance with the light-receiving pattern.
